# EUROPEAN PATENT SPECIFICATION

(11) **EP 2 090 687 B1**
(45) Date of publication and mention of the grant of the patent: **18.04.2012**
(21) Application number: 09002078.5
(22) Date of filing: 13.02.2009
(51) Int. Cl.: D06F 37/20

(54) **Friction damper for linen washing machines**
Reibungsdämpfer für Leinenwaschmaschinen
Amortisseur à friction pour machines à laver le linge

(30) Priority: 15.02.2008 IT MI20080237
(43) Date of publication of application: 19.08.2009
(73) Proprietor: C.I.M.A. Compagnia Italiana Molle Acciaio S.p.A., 20040 Busnago (MI) (IT)
(72) Inventor: Ferlicca, Roberto, 20040 Busnago Milano (IT)
(74) Representative: Cicogna, Franco

(56) References cited:
- EP-A- 0 555 707
- DE-A1-102004 047 999
- US-A1- 2006 011 429

## Description

### BACKGROUND OF THE INVENTION

The present invention relates to a friction damper for linen washing machines and the like.

As is known, linen washing machines conventionally comprise a metal vessel including a basin or drum, a basket, an electric motor, one or more weighing elements, and associated devices necessary for the washing machine operation.

The basket or drum, which is suspended through suspending springs, is anchored to the washing machine bearing framework through a pair of dampers, of a so called friction type, for reducing vibrations and noise generated as the basket or drum is rotatively operated.

Prior friction dampers comprise a damper cylindric stem, movable in a cylindric casing including on its inner surface a plurality of friction annular elements which, cooperating by the stem surface, provide the desired damping effect. The free end portions of the stem and casing comprise anchoring eyelets, respectively for providing fixation to the basket and framework. Friction dampers of the above mentioned type are disclosed, for example, in the document US 6 264 014 to the same Applicant, and in the documents W009950568 and WO2005007964.

In the above mentioned prior devices, the damping force depends on the coupling between the stem and plastic material friction surfaces of the annular elements, said damping force being so selected as to be a satisfactory one under different operation conditions, such as a slow rotary movement during the washing operation proper and the high speed rotary movement during the centrifuging operation.

However, optimum damping forces are very different depending on the washing machine operating cycle and they, for example, have a maximum value at the starting of the centrifugal movement of a basket holding therein a comparatively high linen load, and being at a minimum value, or practically zero, at a maximum rotary revolution value.

Thus, in view of the foregoing, friction dampers with a short free stroke portion before engaging by friction the stem and friction surfaces have been already proposed.

On the other hand, modern linen wash machine control central unit would be potentially able of finding, with a sufficient precision and quickness, different operating conditions: however, no variable and controllable force damper adapted to provide a reliably controlled variable force and having a low cost to be installed in conventionally linen washing machines are at present available.

The document JP4371194 discloses a linen washing machine damper designed for changing the damping from a maximum value to a minimum value to greatly reduce vibrations and noise during the centrifuging operating step. The damping variation is herein achieved by modifying the outer diameter of the stem through an application of an electric current affecting an operating solenoid.

The document DE-A1-102004-047999 discloses a friction damper according to the preamble of claim 1.

### SUMMARY OF THE INVENTION

Accordingly, the main object of the present invention is to overcome the above mentioned drawbacks of prior damping device, to provide a friction damper allowing to easily and quickly adjust its damping force, in a continuous manner, and within a comparatively broad range of friction damping values, and which, moreover, is adapted to operate in a very reliable manner and has a very small cost.

According to the invention, the above mentioned objects, as well as yet other objects, which will become more apparent hereinafter, are achieved by a friction damper for connection between a framework and basket of a linen washing machine according to claim 1. Further advantageous characteristics of the invention are disclosed in the dependent claims.

Advantageously, the friction damper according to the present invention allows to timely fit its damping effect to the real operating conditions of the washing machines, thereby greatly reducing the washing machine noise and vibrations.

Another advantage of the present invention is that of greatly reducing the weight of the weighing material, and, accordingly, the overall weight of the washing machine.

Moreover, according to the invention, also the stress transmitted from the washing machines to the supporting surface thereof are greatly reduced.

### BRIEF DESCRIPTION OF THE DRAWINGS

The invention will be disclosed in a more detailed manner hereinafter with reference to the accompanying drawings, showing preferred, though limitative, embodiments of the invention, and where:
Figure 1 is a perspective view of a preferred embodiment of a friction damper according to the present invention;
Figures 2A and 2B show, respectively, a front view and a cross-sectional view of an annular friction element; and
Figures 3A and 3B show, respectively, a front view and a side view of a compression element.

### DESCRIPTION OF THE PREFERRED EMBODIMENTS

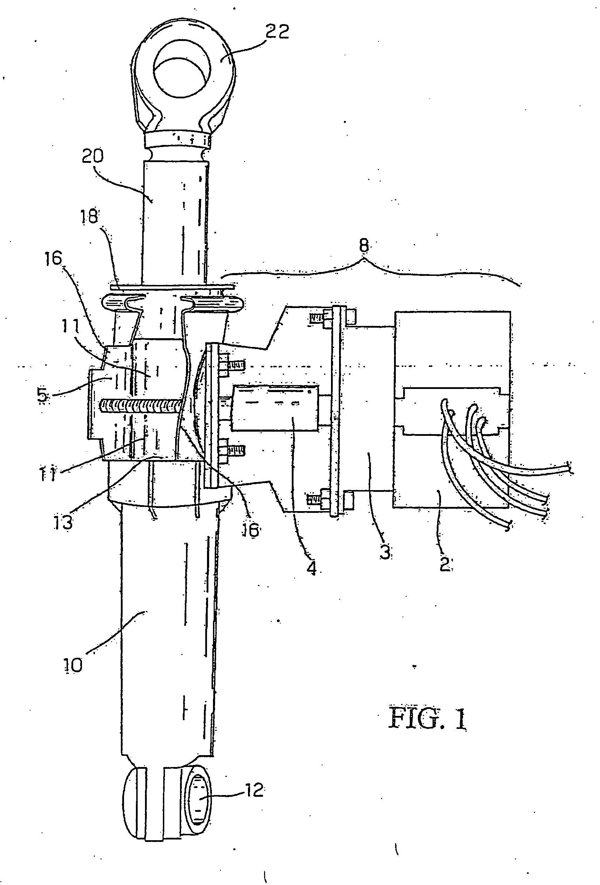

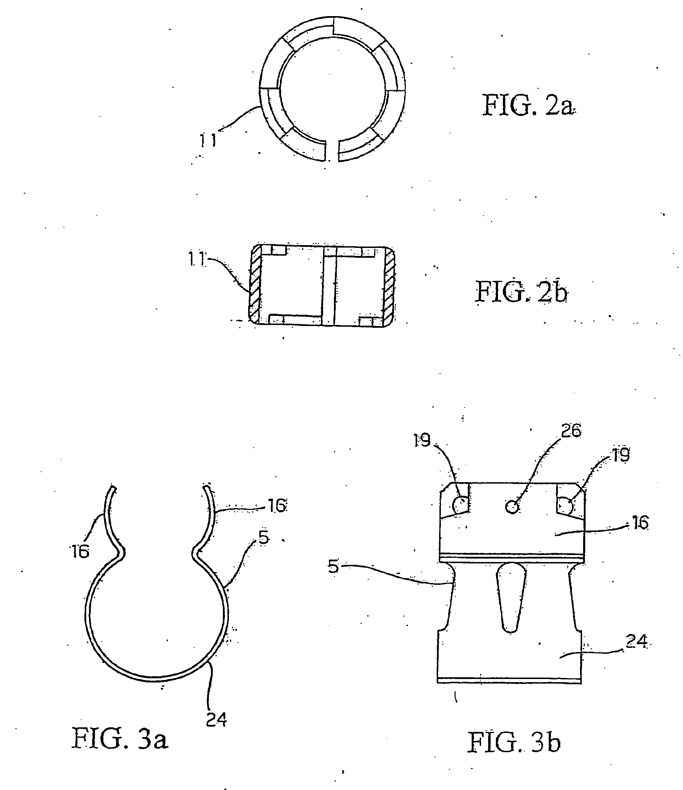

With reference to figure 1, a friction damper according to the present invention comprises a cylindric casing 10 therein a cylindric stem 20 can be slidably displaced with a given friction. Said cylindric casing is preferably made of a plastics material and is closed at one end portion thereof where a plastics material eyelet 12 for anchoring it to the washing machine framework is formed. Inside said eyelet are engaged two annular friction elements 11 (better shown in figures 2A and 2B) which are preferably made in any per se known manner and comprise a friction strip consisting of a plastics material such as foamed polyurethane, and being applied on their inner surfaces.

The cylindric stem 20, preferably made of a surface processed metal material, is designed for axially sliding in the cylindric casing 10 and at its free end portion, a plastic material anchoring eyelet 22 is arranged.

The up to now disclosed construction is of a substantially known type and, accordingly, it will be not disclosed in further details.

According to the present invention, that portion of the cylindric casing 10 arranged near the opening has an increased diameter, and being closed by a perforated plug element 18 for allowing the stem 20 to pass therethrough. At this enlarged diameter portion of said casing are arranged two friction annular elements 11 (including a friction inner strip), and being moreover provided a side window 13 angularly extending through an extending portion less than a half of the circumference.

Between the inner surface of the cylindric casing 10 and the two annular friction elements 11 is arranged a resiliently deformable element 5, designed for providing on said annular elements 11 a controllably variable pressure.

In the embodiment shown in figures 3A and 3B, the element 5 is designed as a generally rectangular spring, having a curved or bent circular portion 24 and two side end edges 16 substantially parallel to one another, on which are formed holes 19 (on an edge or flap) for clamping to the casing 10, and further holes 26 (on both edges or flaps) the operation of which will be disclosed in a more detailed manner hereinafter. As shown, in the assembled friction damper, the edge or flap portions 16 will abut against the side edges of the window 13.

The subject friction damper comprises moreover a motor-driven device 8 clamped to the casing 10 and adapted to affect the deformable element 5 so as to change the pressing force therewith the annular elements clamp the cylindric stem 20, thereby changing the friction damper force.

According to the embodiment shown in figure 1, the motor driven device 8 comprises a bidirectional electric motor 2, a geared unit 3 and an output shaft 4, which is at least partially threaded, engaging the above mentioned edge or flap portions 16. More precisely, the free end part of the threaded portion 4 is anchored, with a possibility of freely rotating (but without any axial translation) in one of the holes 26, whereas the threaded portion is adapted to be screwed on in the hole 26 formed in the other flap 16 as in a ring-nut. In this connection it should be apparent that the device could also have other construction, adapted to provide, under the control of the motor 2, an approaching and moving away movement of the flaps 16, as well as corresponding increases and decreases of the pressure force applied on said elements 11.

The friction damper according to the present invention operates as follows.

As an electric signal sent by the washing machine central control unit causes the machine shaft to turn for a given turning angle, the threaded portion 4 will rotate either in a direction or in the other direction, thereby either clamping or releasing the deformable element 5 which, in turn, will increase or decrease the friction between the elements 11 and stem, and, consequently, the friction damper force. More specifically, according to the present invention, the motor driven device is suitable to change, as controlled by the machine central control unit, the friction conditions between the annular friction element 11 and cylindric stem 20. The mode of operation of the central control unit for detecting the operation conditions and generating corresponding driving signals for the motor driven device is a conventional one and, anyhow, does not pertain to the present invention.

Advantageously, the spring forming said deformable element is a pre-tensioned spring, that is it will hold its clamping pressure (and accordingly its clamping torque) at a middle value within the range of the required values. For example, to provide a change of the friction damper force of 200 newtons, the spring will be calibrated at a rest position corresponding to 100 newtons, and the friction damper will be then brought to operate at a damping force value decreasing to zero, by causing the motor to turn in a direction, and to values toward a maximum force by opposite direction rotary movements. This would allow to further reduce the size and power of the motor.

The above disclosed embodiment is at present considered as the most preferred one, but, however, according to a modified embodiment of the invention, the resiliently deformable element could also comprise a single flap portion thereon a peg or the like could apply a pushing force depending on the motor rotary movement.

While the invention has been illustrated with reference to preferred structures thereof, it is susceptible to other application and modifications which will come within the scope of the invention, as it would apparent to one skilled in the art.

## Claims

1. A friction damper for providing a coupling between a framework and basket of the linen washing machine, comprising:
- a cylindric casing (10) closed at an end portion thereof and including an anchoring eyelet (12) at said closed end portion thereof; and
- a cylindric stem (20) axially slidably engaged in said cylindric casing (10) and having, at a free end portion thereof, a clamping eyelet (22);
said cylindric casing comprising an enlarged diameter portion within which an annular friction element assembly (11) for providing a friction force on said cylindric stem (20) is arranged, a resiliently deformable element being deformed by a motor driven device (8) arranged outside of said cylindric case (10) **characterized in that** said annular friction member assembly (11) being encompassed by said resiliently deformable element (5) adapted to press with a variable pressing force said annular friction element assembly (11) on said cylindric stem (20).

2. A friction damper, according to claim 1, **characterized in that** said at least an annular friction element assembly (11) comprises two friction annular elements (11) and that said portion of said cylindric casing (10) comprises a side window (13).

3. A friction damper, according to claim 1, **characterized in that** said resiliently deformable element (5) comprises a spring having a circular curved portion (24) housed in said cylindric casing (10) and two substantially parallel side flap portions (16) exiting said side windows (13) and abutting against edge portions of said window (13).

4. A friction damper, according to claims 1 to 3, **characterized in that** said motor driven device (8) comprises an electric bidirectional motor (2), a geared unit (3) and an at least partially threaded output shaft (4) engaging both said flap portions (16).

5. A friction damper according to claim 4, **characterized in that** said threaded portion (4) has an end portion rotatively clamped to one of said flap portions (16), said threaded portion being threadably engaged in a hole formed in the other of said flap portions (16).

## Patentansprüche

1. Reibungsdämpfer zum Bereitstellen einer Kupplung zwischen einer Rahmenkonstruktion und einem Korb einer Weißwäsche-Waschmaschine, Folgendes umfassend:
- ein zylindrisches Gehäuse (10), das an seinem einen Endabschnitt geschlossen ist und an diesem geschlossenen Endabschnitt eine Verankerungsöse (12) aufweist, und
- eine zylindrische Spindel (20), die axial gleitend in das zylindrische Gehäuse (10) eingreift und an einem freien Endabschnitt eine Klemmöse (22) aufweist,
wobei das zylindrische Gehäuse einen Abschnitt mit vergrößertem Durchmesser umfasst, in welchem eine ringförmige Reibelementanordnung (11) angeordnet ist, um an der zylindrischen Spindel (20) eine Reibungskraft bereitzustellen, wobei ein elastisch verformbares Element durch eine motorbetriebene Vorrichtung (8) verformt wird, die außerhalb des zylindrischen Gehäuses (10) angeordnet ist, **dadurch gekennzeichnet, dass** die ringförmige Reibelementanordnung (11) vom elastisch verformbaren Element (5) umgeben ist, das dafür eingerichtet ist, die ringförmige Reibelementanordnung (11) mit unterschiedlicher Druckkraft an die zylindrische Spindel (20) zu drücken.

2. Reibungsdämpfer nach Anspruch 1, **dadurch gekennzeichnet, dass** mindestens eine ringförmige Reibelementanordnung (11) zwei ringförmige Reibelemente (11) umfasst und dass der Abschnitt des zylindrischen Gehäuses (10) ein Seitenfenster (13) umfasst.

3. Reibungsdämpfer nach Anspruch 1, **dadurch gekennzeichnet, dass** das elastisch verformbare Element (5) eine Feder mit einem ringförmigen gekrümmten Abschnitt (24) umfasst, die im zylindrischen Gehäuse (10) aufgenommen ist, und zwei im Wesentlichen parallele Seitenklappenabschnitte (16), die von den Seitenfenstern (13) ausgehen und an den Randabschnitte des Fensters (13) anliegen.

4. Reibungsdämpfer nach Anspruch 1 bis 3, **dadurch gekennzeichnet, dass** die motorbetriebene Vorrichtung (8) einen bidirektionalen Elektromotor (2), eine Getriebeeinheit (3) und eine mindestens teilweise mit Gewinde versehene Ausgangswelle (4) umfasst, die in beide Klappenabschnitte (16) eingreift.

5. Reibungsdämpfer nach Anspruch 4, **dadurch gekennzeichnet, dass** der mit Gewinde versehene Abschnitt (4) einen Endabschnitt aufweist, der drehbar an einen der Klappenabschnitte (16) geklemmt ist, wobei der mit Gewinde versehene Abschnitt über das Gewinde in einer Öffnung in Eingriff gebracht ist, die im anderen der Klappenabschnitte (16) gebildet ist.

## Revendications

1. Amortisseur à friction destiné à fournir un couplage entre un bâti et un panier de la machine à laver le linge, comprenant :
- un boîtier cylindrique (10) fermé au niveau d'une portion d'extrémité et incluant un billet d'ancrage (12) au niveau de ladite portion d'extrémité fermée ; et
- une tige cylindrique (20) engagée pour coulisser axialement dans ledit boîtier cylindrique (10) et présentant, au niveau d'une portion d'extrémité libre, un billet de montage (22) ;
ledit boîtier cylindrique comprenant une portion à diamètre agrandi à l'intérieur de laquelle est agencé un ensemble d'éléments annulaires de friction (11) destiné à fournir une force de friction sur ladite tige cylindrique (20), un élément déformable élastiquement étant déformé par un dispositif de moteur entrainé (8) agencé à l'extérieur dudit boîtier cylindrique (10)
**caractérisé en ce que** ledit ensemble d'éléments annulaires de friction (11) est englobé dans ledit élément déformable élastiquement (5) conçu pour appuyer, avec une force de pression variable, ledit ensemble d'éléments annulaires de friction (11) sur ladite tige cylindrique (20).

2. Amortisseur à friction selon la revendication 1, **caractérisé en ce que** ledit au moins un ensemble d'éléments annulaires de friction (11) comprend deux éléments annulaires de friction (11) et **en ce que** ladite portion dudit boîtier cylindrique (10) comprend une fenêtre latérale (13).

3. Amortisseur à friction selon la revendication 1, **caractérisé en ce que** ledit élément déformable élastiquement (5) comprend un ressort présentant une portion incurvée circulaire (24) logée dans ledit boîtier cylindrique (10) et deux portions de battant latérales sensiblement parallèles (16) qui sortent desdites fenêtres latérales (13) et qui butent contre les portions de bord de ladite fenêtre (13).

4. Amortisseur à friction selon les revendications 1 à 3, **caractérisé en ce que** ledit dispositif entraîné (8) comprend un moteur électrique bidirectionnel (2), un ensemble motoréducteur (3) et un arbre de sortie au moins partiellement fileté (4) qui s'engage dans les deux dites portions de battant (16).

5. Amortisseur à friction selon la revendication 4, **caractérisé en ce que** ladite portion filetée (4) présente une portion d'extrémité montée pour tourner sur l'une desdites portions de battant (16), ladite portion filetée étant engagée par filetage dans un trou formé dans l'autre desdites portions de battant (16).
